# EUROPÄISCHE PATENTANMELDUNG

(11) **EP 4 509 384 A1**
(43) Veröffentlichungstag der Anmeldung: **19.02.2025**
(21) Anmeldenummer: 23191236.1
(22) Anmeldetag: 14.08.2023
(51) Int. Cl.: B61L 27/70, B61L 27/20

(54) **LEITTECHNIK-SYSTEM FÜR DIE STEUERUNG INDUSTRIELLER PROZESS MIT MEHRSCHICHTIGEM RUNTIME-FRAMEWORK**

(71) Anmelder: Siemens Mobility AG, 8304 Wallisellen (CH)
(72) Erfinder: Hürzeler, Christoph, 8305 Dietlikon (CH); Leupp, Markus, 8184 Bachenbülach (CH); Meyer, Thomas, 3065 Bolligen (CH)
(74) Vertreter: Siemens Patent Attorneys

(57) **Zusammenfassung**

Der vorliegenden Erfindung liegt die Aufgabe zugrunde, ein Leittechniksystem, insbesondere für den schienengebundenen Verkehr anzugeben, mit dem es möglich ist nicht-funktionale Anforderung an das Leittechniksystem in einfacher Weise konfigurierbar und für das Leittechniksystem bereitstellbar zu machen.

Diese Aufgabe wird erfindungsgemäss durch ein Leitsystem für die Steuerung eines industriellen Prozesses, insbesondere Leitsystem für eine industriellen Produktionsanlage oder für eine Steuerung von Verkehr, insbesondere von schienengebundenem Verkehr, gelöst, umfassend:
a) eine Produkt-Instanz für die Software des die leittechnischen Anforderungen des industriellen Prozesses steuernden Leitsystems;
b) eine Leitsystem-Plattform zur Ausführung einer Instanz des Leitsystems, wobei die Leitsystem-Plattform eine Laufzeitumgebung (Runtime Framework) aufweist, die die folgenden Komponenten umfasst:
c) eine Core-Instanz (RTF Core), die ertüchtigt ist eine Laufzeitumgebung bereitzustellen, welche es ermöglicht, Applikationsfunktionen, wie z.B. eine Zugverfolgung, eine Protokollierung, etc., verteilt auf mehrere überwachte Prozesse, d.h. jeweils in einem überwachten Thread, auszuführen;
d) aufbauend auf der Core-Instanz eine Workplace-Instanz (RTF Workplace) ausgestaltet ist, welche die auf der untersten logischen Schicht befindliche Core-Instanz erweitert und die Umsetzung von Client-Applikationen unterstützt; und
e) aufbauend auf der logischen Schicht der Core-Instanz eine weitere logische Schicht mit einer Ensemble-Instanz (RTF Ensemble) bereitgestellt ist, welche Hilfsfunktionen aufweist, die die Umsetzung von Server-Applikationen erleichtert, vorzugsweise solche Hilfsfunktionen, die im Kontext eines verteilten Serversystems für die Ausführung der Software des Leitsystems relevant sind.

## Beschreibung

Die vorliegende Erfindung bezieht sich auf ein Leittechniksystem für die Steuerung eines industriellen Prozesses, insbesondere Leitsystem für eine industrielle Produktionsanlage oder für eine Steuerung von Verkehr, insbesondere von schienengebundenem Verkehr.

Im schienengebundenen Verkehr befahren die Züge das Eisenbahnnetz entlang von Fahrstrassen, die von einem Leitsystem auf der Ebene der dispositiven Zugsteuerung angefordert werden. Diese Anforderung kann automatisch ausgelöst werden, wenn die Züge fahrplanmässig verkehren und somit eine Abfolge von zuvor projektierten Fahrstrassen vorgesehen ist. Bei Abweichungen vom Fahrplan und sonstigen abweichenden Eingriffen werden die Fahrstrassen von dem Fahrdienstleiter manuell angefordert. Jede angeforderte Fahrstrasse wird von einer Stellinstanz (zentral oder dezentral) erst dann eingestellt, wenn die Fahrwegelemente (Weichen, Signale, Blockfreimeldung, Moving Block im ETCS) für diese Fahrstrasse verfügbar sind und entsprechend eingestellt und gegen anderweitige Nutzung durch konkurrierende Fahrstrassen gesperrt werden können. Nach der Befahrung der Fahrstrasse bzw. der in ihr befindlichen Fahrwegelemente wird diese Sperrung wieder aufgehoben und die Fahrwegelemente stehen zur Einstellung neuer Fahrstrassen wieder zur Verfügung.

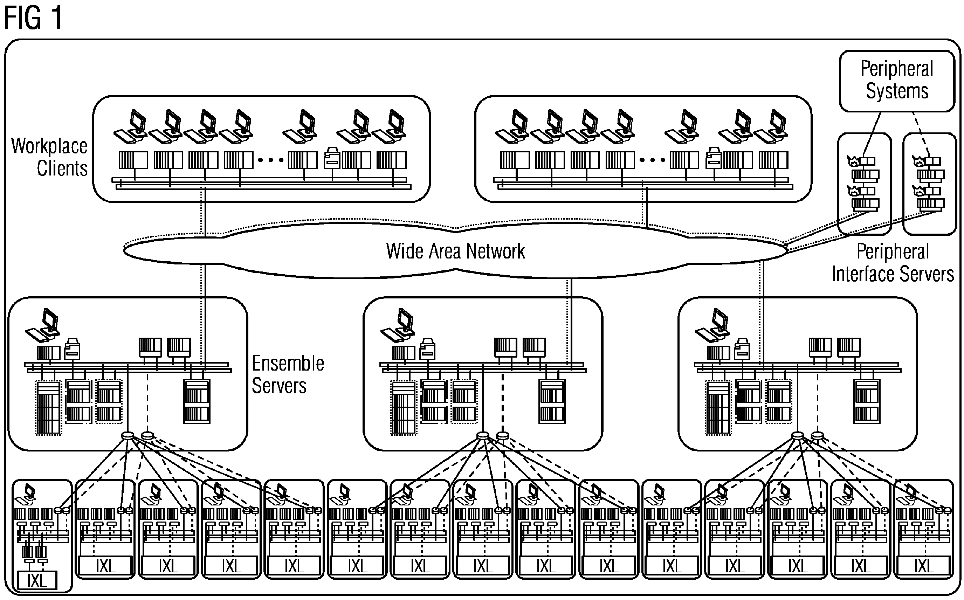

Derartige Leittechniksysteme werden oft in einer Client-Server Architektur aufgebaut wie dies in Figur 1 dargestellt ist. In einer Leitstelle gibt es Bedienplätze (vgl. «Workplace Clients» in Figur 1), welche für den Fahrdienstleiter die aktuelle Situation der Bahninfrastruktur inklusive Zugverlauf darstellen und diesem erlauben bei Bedarf mittels graphischer Bedienoberfläche einzugreifen und verschiedene Aktionen auszulösen. Diese Bedienplätze interagieren mit Serversystemen («Ensemble Servers»), welche Bedienplätze an einem oder aus mehreren Standorten mit den zugehörigen Stellwerken in einem Bahninfrastrukturgebiet vernetzen und allfällig diverse automatische Zugleitalgorithmik implementieren.

Eine grosse Herausforderung bei derartigen Leittechniksystemen ist es, die Client und Server-Applikationen nicht nur mit der notwendigen Qualitätsmerkmalen zu entwickeln, sondern auch zu betreiben. Mit anderen Worten bedeutet dies, dass nebst der eigentlichen Bahnleitfunktionalität auch diverse nichtfunktionale Aspekte zu berücksichtigen sind. Diese betreffen einerseits direkte Kundenerwartungen und andererseits implizite Erwartungen an den Entwicklungsprozess selbst, welche sich wiederum auf die Produkt-Qualität auswirken (Wartbarkeit, Testbarkeit etc.).

Die folgende nicht abschliessende Liste von Qualitätsmerkmalen stellt die in der Regel wichtigsten Punkte für eine Zugleittechnik-Software bzw. das Zugleittechniksystem zusammen:
i) sehr hohe Zuverlässigkeit erfordert Massnahmen zur Behandlung von typischen Fehlerfällen sowie bei Auftreten von Fehlern deren entsprechende Offenbarung mit ggfs. auch Hinweisen zur Fehlerbehandlung
ii) sehr hohe Verfügbarkeit erfordert Massnahmen zur Behandlung von Teil-Systemausfällen (z.Bsp. Redundanz, Wiederherstellung, etc.) sowie deren Offenbarung
iii) hohe Sicherheit (SIL 0 bis SIL 2) erfordert Massnahmen zur Absicherung der Informationsgrundlagen, anhand welcher das System automatische Entscheide trifft bzw. manuelle Eingriffe durch einen Benutzer erlaubt sowie Absicherung der korrekten Ausführung getroffener Entscheide. Beispiele hierfür sind keine Verarbeitung fehlerhafter Konfigurationen, keine Verarbeitung fehlerhafter Meldungen an das oder im System, Quervergleich kalkulierter Entscheide des System etc.
iv) Cyber-Security erfordert Massnahmen in Bezug zu Zugriff-/Eingriffskontrolle, Identifikation von Quellen, welche Änderungen im System auslösen sowie die Offenbarung relevanter Ereignisse im System etc.
v) hohe Wartbarkeit und Erweiterbarkeit erfordern Massnahmen im Entwicklungsprozess der Software-Komponenten, aber auch grundlegende Konzepte für die Entwicklung von Software-Komponenten, welche bestenfalls konkret in der Codebasis einer Software manifestieren
vi) hohe Testbarkeit bzw. Validierbarkeit erfordert Massnahmen im Entwicklungsprozess aber auch grundlegende Konzepte für die Entwicklung von Software-Komponenten, welche bestenfalls konkret in der Codebasis einer Software manifestieren.

Auf Grund der zugehörigen normativen Vorgaben gelten diese Qualitätsmerkmale sowohl produkteübergreifend, zum Beispiel Produktlinien innerhalb des Siemens-Konzerns, aber auch über verschiedene Hersteller hinweg, wie auch Subsystemübergreifend (Client-/Server und weitere Teilsysteme).

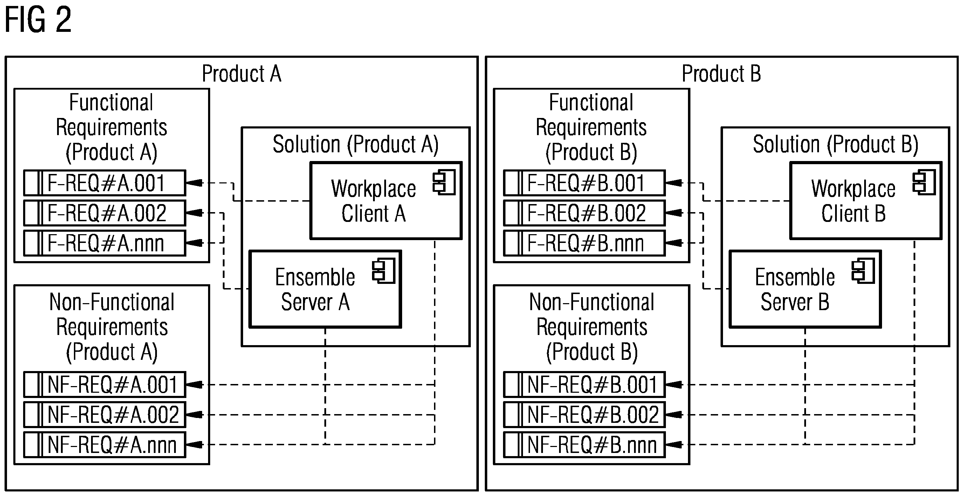

Da eine Regulierung des schienengebundenen Verkehrs häufig noch mit proprietären nationalen Zugsicherungs- und Zugleittechniksystemen einhergeht, werden Software-Applikationen für Server und Client in diesem Umfeld trotz der o.g. Anforderungen häufig isoliert entwickelt und nachgehend schrittweise zu einem Gesamtsystem integriert. Im Weiteren werden Massnahmen in Bezug zu den erwähnten Qualitätsmerkmalen direkt in den jeweiligen Software-Applikationen umgesetzt (vgl. in Figur 2 die verschiedenen Leittechnik-Lösungen A und B). Dies geschieht z.T. unter Verwendung von OSS/COTS-Lösungen und z.T. durch eigens implementierte Spezial-Lösungen. Jede Applikation wird im Anschluss als Gesamtpacket getestet, validiert und nach der Übergabe an den Kunden als Gesamtsystem gewartet.

Dieser Effekt verstärkt sich weiter, wenn Lösungen von einem Hersteller für verschiedenste Kunden oder Lösungen für dasselbe Problem eines Kunden (z. Bsp. zuverlässiges, sicheres Zugleitsystem) verschiedener Hersteller betrachtet werden. Es entstehen spezialisierte Einzellösungen, die grundsätzlich immer ähnliche Kundenbedürfnisse mit ähnlichen Qualitätsmerkmalen befriedigen wollen.

Der vorliegende Erfindung ist daher von den folgenden Kernproblemen angetrieben worden:
i) Bisher umgesetzte Zugleitsysteme werden mit Fokus auf funktionale Anforderungen entwickelt und treffen starke Annahmen darüber, wie Kunden ihre Bahnsysteme betreiben wollen.
ii) Softwareprodukte für Zugleitsysteme werden aus stark spezialisierten Teillösungen zusammengebaut und in dieser Form gewartet und betrieben werden müssen. Jedes Teilsystem verwendet andere Technologien und z.T. unterschiedliche Konzepte, um die eigentlich systemübergreifenden nicht-funktionalen Anforderungen zu adressieren.

Dies birgt ein Risiko für folgende unerwünschte Auswirkungen:
i) Produkte werden kundenspezifisch auf Grundlage bereits bestehender Produkte immer wieder «neu erfunden» und entwickelt.
ii) Bekannte Probleme werden mit z.T. neu erfundenen Lösungen gelöst. D.h. die Wiederverwendbarkeit von Softwareanteilen, die bekannte Probleme lösen, ist limitiert.
iii) Jedes Produkt muss einzeln als Gesamtpacket entwickelt, dokumentiert, getestet, validiert, betrieben und gewartet werden.
iv) Projektmanager, Entwickler, Tester, Validierer etc. spezialisieren sich auf die Produkte bzw. deren Subsysteme (Client-/Server) sowie deren Eigenschaften. Entwicklung, Wartung und Betrieb erfordern zu einem hohen Grad Spezialwissen nicht nur in Bezug auf die Produkte selbst, sondern auch in Bezug darauf, ob es sich um ein Client- oder Server-Anteil der Gesamtsoftware handelt.
v) Erschwerte Strukturierung/Trennung zwischen domänenspezifischen Fachfunktionen für Zugleittechnik und allgemein anwendbaren Massnahmen zur Gewährung der weiter oben aufgelisteten Qualitätsmerkmale.
vi) Die «cross-cutting» nicht-funktionalen Anforderungen können nur schwer «cross-cutting» adressiert werden.

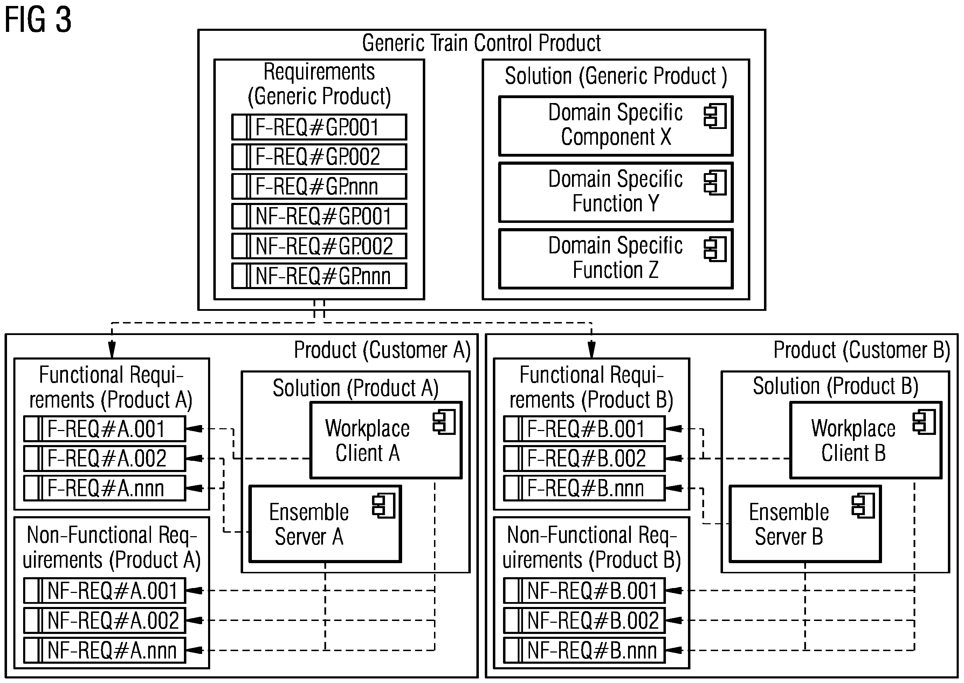

Selbst bei «Generischen Leittechnik-Produkten», wie z. B. dem im Siemens-Konzern entwickelten eigenen Leittechniksystem «Controlguide Iltis N» werden starke, domänenspezifische Annahmen darüber getroffen, wie der Kunde seine Anlagen betreibt. Sie fokussieren daher stark auf die funktionalen Systemanforderungen an ein Zugleittechniksystem (vgl. Figur 3). Funktionale und nicht-funktionale Erfordernisse sind zwar generisch definiert, aber sie werden individuell für die Produkte beispielsweise bei einem Kunden A und einem Kunden B angepasst und können sicher vollkommen voneinander weg entwickeln. Dies hat zur bereits weiter oben diskutieren Folge, dass Zugleittechniksysteme in anderen Ländern oder von anderen Kunden zum Teil nur schwer abgedeckt werden können, wenn die funktionellen Kundenbedürfnisse von den Vorgaben eines «generischen Produkt» zu stark abweichen. Es werden somit Spezialprodukte für den Kunden von Stammprodukten abgeleitet.

Somit setzt die heutige Entwicklung den Fokus auf die clientseitige oder server-seitige Applikationsentwicklung für konkrete Kundenanforderungen. Die entsprechenden Software-Applikationen werden mit separaten Tools, Libraries und z.T. unterschiedlichen Workflows von separaten Teams entwickelt und nachfolgend zu einem Gesamtsystem integriert.

Sofern z.B. Code-Funktionen client-seitig wie auch serverseitig verwendet werden sollen, werden diese in externe Libraries ausgelagert und zur Verfügung gestellt oder clientseitiger Code verwendet server-seitige Funktionen bzw. umgekehrt. Je nach Entstehungsgeschichte werden sowohl auf Client- wie auch Server-Seite notwendige Funktionen (z.B. sicherheitsbezogene Massnahmen) separat, d.h. unter Umständen mindesens doppelt entwickelt und z.T. trotz gleicher Zielstellung unterschiedlich implementiert. Hierbei erschwerend wirkt, dass Server und Client-Code z.T. in unterschiedlichen Programmiersprachen und Entwicklungsframeworks umgesetzt werden.

Dies resultiert dahingehend, dass eine übergreifend integrierte Entwicklung nicht möglich oder zumindest stark erschwert ist. Entsprechend ist eine starke Server- oder Client-Spezialisierung der Entwicklerteams die Folge.

Der vorliegenden Erfindung liegt daher die Aufgabe zugrunde, ein Leittechniksystem, insbesondere für den schienengebundenen Verkehr anzugeben, mit dem es möglich ist nicht-funktionale Anforderung an das Leittechniksystem in einfacher Weise konfigurierbar und für das Leittechniksystem bereitstellbar zu machen.

Diese Aufgabe wird erfindungsgemäss durch ein Leitsystem für die Steuerung eines industriellen Prozesses, insbesondere Leitsystem für eine industrielle Produktionsanlage oder für eine Steuerung von Verkehr, insbesondere von schienengebundenem Verkehr, gelöst, umfassend:
a) eine Produkt-Instanz für die Software des die leittechnischen Anforderungen des industriellen Prozesses steuernden Leitsystems;
b) eine Leitsystem-Plattform zur Ausführung einer Instanz des Leitsystems, wobei die Leitsystem-Plattform eine Laufzeitumgebung (Runtime Framework) aufweist, die die folgenden Komponenten umfasst:
c) eine Core-Instanz (RTF Core), die ertüchtigt ist eine Laufzeitumgebung bereitzustellen, welche es ermöglicht, Applikationsfunktionen, wie z.B. eine Zugverfolgung, eine Protokollierung, etc., verteilt auf mehrere überwachte Prozesse, d.h. jeweils in einem überwachten Thread, auszuführen;
d) aufbauend auf der Core-Instanz eine Workplace-Instanz (RTF Workplace) ausgestaltet ist, welche die auf der untersten logischen Schicht befindliche Core-Instanz erweitert und die Umsetzung von Client-Applikationen unterstützt; und
e) aufbauend auf der logischen Schicht der Core-Instanz eine weitere logische Schicht mit einer Ensemble-Instanz (RTF Ensemble) bereitgestellt ist, welche Hilfsfunktionen aufweist, die die Umsetzung von Server-Applikationen erleichtert, vorzugsweise solche Hilfsfunktionen, die im Kontext eines verteilten Serversystems für die Ausführung der Software des Leitsystems relevant sind.

Auf diese Weise werden bei der Entwicklung eines derartigen Leitsystem generelle, nicht-funktionale Aspekte nicht mehr als sekundär behandelt und werden nicht mehr mit dezidierter Software adressiert, sondern als Teil der funktionalen Softwareanteile in dem Leittechniksystem in dem dedizierten Runtime Framework über die verschiedenen jeweils bestimmte Aufgaben lösenden Instanzen zur Verfügung gestellt.

In einer zweckmässigen Ausgestaltung der vorliegenden Erfindung kann in der Core-Instanz als Applikationsfunktionen eine Zugverfolgung und eine Protokollierung ausführbar sein. Weitere wichtige Applikationsfunktionen für ein Eisenbahnleittechniksystem können hier ebenfalls ausgeführt werden

In einer weiteren besonders vorteilhaften Ausgestaltung der vorliegenden Erfindung kann jede Applikationsfunktion als Laufzeitkomponente modularisierbar und von anderen Applikationsfunktionen entkoppelbar sein, wobei auch optional jede Applikationsfunktion beliebig auf unterschiedliche Prozesse verteilbar und bei Bedarf auch mehrfach ausführbar sein kann.

Die Entwickler der Applikationsfunktionen können in vorteilhafter Weise über die Core-Instanz unterstützt werden, indem mittels der Core-Instanz Hilfsmittel zur Entwicklung einer Applikationsfunktion Hilfsmittel bereitgestellt werden, mittels welchen z.B. rechnerlokal kommuniziert werden kann und/oder überwachte Subthreads- oder Timer gestartet werden können.

Weiter kann es für die Systemstabilität bedeutsam sein, wenn die Core-Instanz nebst Massnahmen zur Überwachung und zur Erkennung von Fehlern auch Mittel zur automatischen Wiederherstellung von Teilfunktionen nach einem Fehlerfall bereitstellt.

Zudem können sowohl die Betreiber als auch die Entwickler eines derartigen Leittechniksystem vorteilhaft unterstützt werden, wenn je nach Konfiguration durch ein konkretes Produkt in der Core-Instanz Systemprüfungen zur Startzeit oder in periodischen Intervallen ausführbar sind, wie z.B. Prüfungen auf den Füllstand einer Harddisc, Prüfungen auf den Zustand eines Arbeitsspeichers und Prüfungen auf mögliche Datenverfälschung auf dem Filesystem.

In einer weiteren vorteilhaften Ausgestaltung der Erfindung kann es vorgesehen sein, dass die logische Schicht der Workplace-Instanz ausgestaltet ist um Hilfsfunktionen aufzuweisen, die vorzugsweise zum Starten und Betreiben von überwachten GUI-Applikationen, zur Bereitstellung einer zuverlässige Akustik für Meldungen der Client-Applikationen und/oder zur Handhabung von Benutzerprofilen oder Benutzersessions verwendbar sind.

In der Ensemble-Instanz kann es ausserdem vorteilhaft sein, wenn als Hilfsfunktionen ein Zustandsabgleich zwischen Servern und/oder das Betreiben von redundanten Applikationsfunktionen auf der Client- und/oder der Server-Seite vorgesehen sind. Ausserdem sind in dieser Ensemble-Instanz weitere Hilfsfunktionen für den Betreiber und den Entwickler hilfreich, weil dies nun nicht in der eigentlichen funktionalen Leittechnik-Applikationen implementiert werden muss.

Weitere vorteilhafte Ausgestaltungen der vorliegenden Erfindung sind den übrigen Unteransprüchen zu entnehmen.

Vorteilhafte Ausführungsbeispiele der vorliegenden Erfindung werden anhand der Zeichnung näher erläutert. Dabei zeigen:
- Figur 1: in schematischer Ansicht ein Übersichtsbild eines Leittechniksystems für den schienengebundenen Verkehr in Client-Server-Architektur gemäss dem Stand der Technik; und
- Figur 2: in schematischer Ansicht ein Übersichtsbild eines Leittechniksystems für den schienengebundenen Verkehr in Client-Server-Architektur mit verschiedenen Lösungen A und B für das Leittechniksystem gemäss dem Stand der Technik;
- Figur 3: in schematischer Ansicht ein Übersichtsbild eines Leittechniksystems für den schienengebundenen Verkehr in generischen Client-Server-Architektur mit verschiedenen Lösungen A und B für das Leittechniksystem sowie dessen funktionale and nicht-funktionale Anforderungen gemäss dem Stand der Technik;
- Figur 4: in schematischer Ansicht ein aus drei Schichten aufgebautes Runtime Framework für ein Leittechniksystem für den schienengebundenen Verkehr gemäss der vorliegenden Erfindung; und
- Figur 5: in schematischer Ansicht ein gemäss dem Drei-Schichten-Aufbau in Figur 4 gestaltetes Runtime Framework für eine Leittechnikumgebung für den schienengebundenen Verkehr mit verschiedenen Instanzen der Leittechnik-Software gemäss der vorliegenden Erfindung.

Ein Schlüsselgedanke bei dem hier beschriebenen Leittechniksystem gemäss der vorliegenden Erfindung ist es den Fokus auf die nicht-funktionalen Anforderungen an ein Zugleittechniksystem zu legen und diese mittels eines spezialisierten Software-Frameworks zu adressieren. Dieses Framework besteht aus einer dedizierten Laufzeitumgebung, welche produktspezifische Fachfunktionen modularisiert ausführt und überwacht (ohne diese zu kennen oder deren Art einzuschränken). Das Runtime Framework selbst bleibt frei von jeglichen Domänen-Spezifika und bietet lediglich diverse Zusatzfunktionen an um z.B. eine zuverlässige Kommunikation, redundante Laufzeitkomponenten oder zuverlässige UI-Anzeigen umzusetzen (d.h. keinerlei Fachfunktionen).

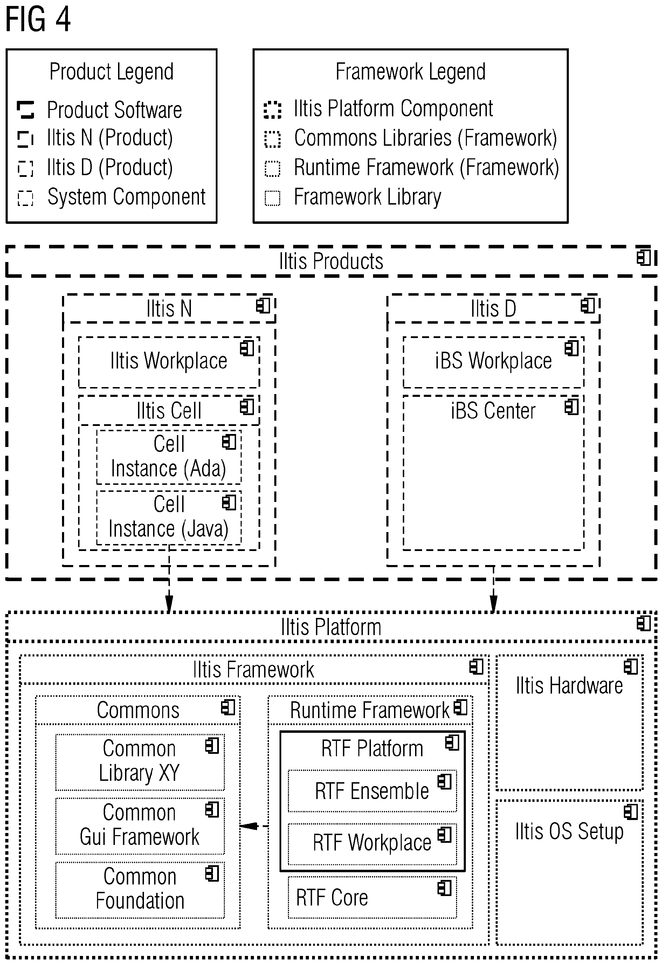

Wie in Figur 4 gezeigt, wird das Runtime Framework aus drei logisch voneinander unterscheidbaren Instanzen aufgebaut:

### 1. RTF Core

Die unterste Schicht mit der Core-Instanz dieses Runtime Frameworks implementiert eine Laufzeitumgebung, welche ermöglicht Applikationsfunktionen, wie z.B. eine Zugverfolgung, eine Protokollierung, etc., verteilt auf mehrere überwachte Prozesse, d.h. jeweils in einem überwachten Thread, ausführen zu lassen. Jede Applikationsfunktion wird so als Laufzeitkomponente modularisiert und von anderen Applikationsfunktionen entkoppelt. Jede Applikationsfunktion kann beliebig auf unterschiedliche Prozesse verteilt und bei Bedarf auch mehrfach ausgeführt werden. Zur Entwicklung einer Applikationsfunktion bietet RTF Core diverse Hilfsmittel an, mittels welchen z.B. rechnerlokal kommuniziert werden kann, überwachte Subthreads- oder Timer gestartet werden können usw. Nebst Massnahmen zur Überwachung und zur Erkennung von Fehlern implementiert diese unterste Schicht RTF Core auch diverse Massnahmen zur automatischen Wiederherstellung von Teilfunktionen nach einem Fehlerfall. Je nach Konfiguration durch ein konkretes Produkt lassen sich weitere Systemprüfungen zur Startzeit oder periodisch ausführen, z.B. Harddisc Füllstand, Zustand Arbeitsspeicher, Datenverfälschung auf dem Filesystem etc.)

### Platform RTF Workplace

Aufbauend auf dieser untersten Schicht wird RTF Workplace definiert, welches die unterste Schicht RTF Core erweitert und die Umsetzung von Client-Applikationen unterstützt. D.h. die Schicht RTF Workplace bietet hierfür diverse Hilfsfunktionen an, wie z.B. zum Starten und Betreiben von überwachten GUI-Applikationen, zuverlässige Akustik, Handhabung von Benutzerprofilen oder Benutzersessions.

### Platform RTF Ensemble

Analog wird aufbauend auf RTF Core die RTF Ensemble Schicht definiert. Diese bietet diverse Hilfsfunktionen an, welche die Umsetzung von Server-Applikationen erleichtert, d.h. insbesondere solche, die im Kontext eines verteilten Serversystems relevant sind. Beispiele hierfür ist der Zustandsabgleich zwischen Servern oder das Betreiben von redundanten Applikationsfunktionen.

Produkte (oben beispielhaft Controlguide Iltis N oder Iltis D des Siemens-Konzerns) können nun ihre Server- wie auch Client-Applikationen aufbauend auf dem Runtime Framework, umfassend RTF Core, RTF Workplace und RTF Ensemble, entwickeln.

Dieser Aufbau vereinheitlicht die Entwicklung von Client- und Server-Applikationsfunktionen. Einerseits können Funktionen so implementiert werden, dass sie sowohl in Client- wie auch in Server-Applikationen wiederverwendet werden können, andererseits wird die entsprechende Applikationsentwicklung vereinheitlicht. D.h. ein Austausch zwischen Client-Entwicklerteam und Server-Entwicklerteam wird vereinfacht.

Analog können Fachfunktionen realisiert werden, welche sich zwischen den Produkten teilen lassen. Arbeitskräfte, welche für ein Produkt tätig waren (Entwicklung, Testing, Validierung etc.) «sprechen» ebenfalls eine gemeinsame Sprache und können bei mehreren Produkten mitwirken. Entsprechend lassen sich auch die zugehörigen Arbeitsabläufe und Prozesse besser vereinheitlichen.

Im Weiteren muss nicht jedes Produkt analoge Probleme einzeln lösen, sondern kann auf standardisierte Mechanismen des Runtime Frameworks zurückgreifen. Diese können in unabhängiger Weise kontinuierlich verbessert und erweitert werden, womit sämtliche Teilsysteme des Runtime Frameworks davon profitieren.

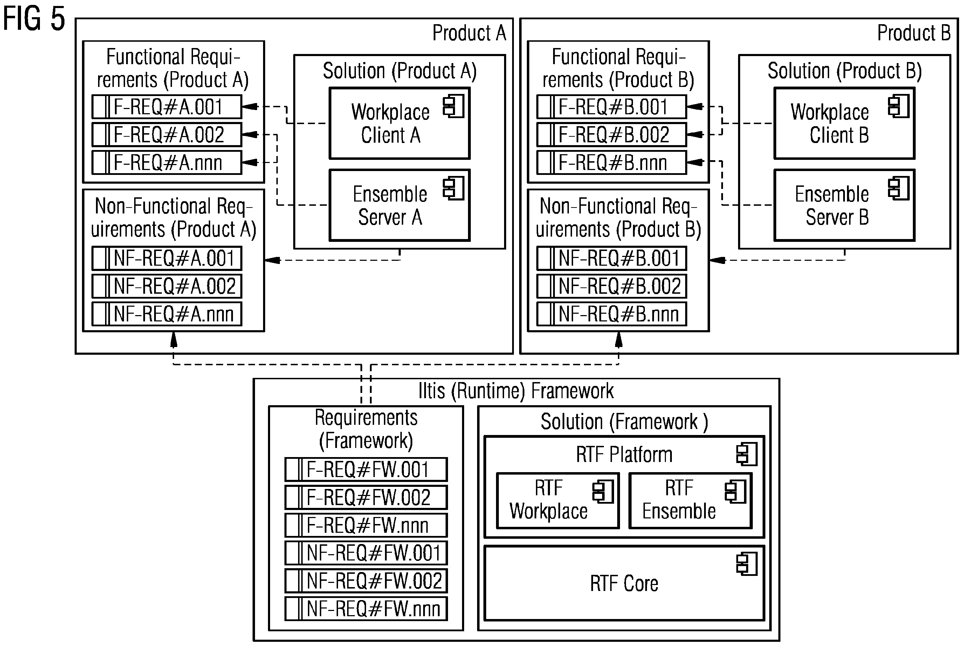

Wie im vorgängigen Abschnitt erwähnt, fokussiert die vorliegende Erfindung mit dem zugehörigen Runtime Framework auf die nicht-funktonalen Anforderungen, die heutzutage an ein dispositives Zugleitsystem gestellt werden. Damit differenziert sich die vorliegende Erfindung vom Ansatz eines eingangs erläuterten "generischen Produkts" für die Zugleittechnik, welches auf die funktionalen Anforderungen und die daraus abgeleiteten Fachfunktionen fokussiert. In der erfindungsgemässen Umsetzung bedeutet dies, dass die zugrundeliegenden Anforderungen durch eine "cross-cutting" Lösung adressiert werden, die auch tatsächlich "cross-cutting" sind, was im Detail für eine Leitsystem mit einem Runtime Framework in der Figure 5 gezeigt ist.

Die Erfindung erlaubt es eine gemeinsame Basis für die Entwicklung sowohl der Client wie auch der Server-Applikationen über verschiedene Produkte hinweg zu realisieren, sowie etablierte Konzepte und Massnahmen zur Sicherstellung der erwähnten Qualitätsmerkmale umzusetzen auf deren Basis, zuverlässige Zugleittechnikprodukte entwickelt werden können.

Als besondere Vorteile eines so aufgebauten Leitsystems für den schienengebundenen Verkehr werden nachfolgend genannt:
i) Massnahmen zur Sicherstellung der Software-Zuverlässigkeit können einmalig auf der Ebene des Runtime Frameworks implementiert und auch dort validiert werden. So kann z.B. ein Mechanismus vorgesehen sein, der Code oder einzelne Konfigurations-Files einer Softwareapplikation auf Verfälschung prüft, was im Besonderen bei Patchen der Softwareapplikation je nach ihrer sicherheitstechnischen Relevanz ein sehr wichtiger Vorgang sein kann.
ii) Modularisierbarkeit und Testbarkeit der Produkt-Applikation wird durch die vereinheitlichte Framework API sichergestellt bzw. gefördert.
iii) Fehler in realisierten RAMSS-Massnahmen und weiteren Grundfunktionen können an einer Stelle in Runtime Framework bzw. seiner Umsysteme, wie einer Common Library, einem Common GUI framework sowie der Common Foundation, behoben werden anstatt dies in der Server- wie auch der Client-Applikationssoftware vornehmen zu müssen.
iv) Auf Grund der vereinheitlichten Laufzeitumgebung in der Core-Instanz RTF Core können Applikationsfunktionen so realisiert werden, dass sie sowohl client- wie auch serverseitig einsetzbar sind bzw. bei Bedarf über Produkte hinweg geteilt werden können.
v) Produkte sind in der Umsetzung ihrer Fachfunktionen völlig frei und können eigenständig entscheiden, ob eine Fachfunktion mit anderen Produkten geteilt werden kann bzw. ob sie bereits bestehende Fachfunktionen anderer Produkte übernehmen, adaptieren oder mit neuen Funktionen ersetzen wollen.
vi) Fachkräfte arbeiten auf Grund einer gemeinsamen Basis und können trotz (bzw. wegen) tieferem Spezialisierungsgrad mehr erreichen.
vii) Eine alternative Lösung wäre es auf bestehende COTS oder OSS-Laufzeitumgebungen zu setzen. Die entsprechenden Lösungen nehmen zwar z.T. Bezug zu den in Abschnitt 1 aufgelisteten Qualitätsmerkmalen, haben jedoch keinen normativen Hintergrund in Bezug zu Zugleitsystemen. Ganz nachteilig ist es hierbei jedoch, dass einerseits keinerlei Garantien zur Langzeitverfügbarkeit dieser Software-Pakete bestehen und andererseits oft nur Anteile der gewünschten Qualitätsmerkmale direkt adressierbar sind.
viii) Im Weiteren widerspricht das Konzept des (Runtime) Frameworks zur Behandlung nicht-funktionaler Anforderungen in der Zugleitechnik nicht der Möglichkeit, die Funktionen des Runtime Frameworks vollständig oder z.T. durch OSS und/oder COTS-Lösungen zu realisieren.

## Patentansprüche

1. Leitsystem für die Steuerung eines industriellen Prozesses, insbesondere Leitsystem für eine industrielle Produktionsanlage oder für eine Steuerung von Verkehr, insbesondere von schienengebundenem Verkehr, umfassend:
a) eine Produkt-Instanz für die Software des die leittechnischen Anforderungen des industriellen Prozesses steuernden Leitsystems;
b) eine Leitsystem-Plattform zur Ausführung einer Instanz des Leitsystems, wobei die Leitsystem-Plattform eine Laufzeitumgebung (Runtime Framework) aufweist, die die folgenden Komponenten umfasst:
c) eine Core-Instanz (RTF Core), die ertüchtigt ist eine Laufzeitumgebung bereitzustellen, welche es ermöglicht, Applikationsfunktionen, wie z.B. eine Zugverfolgung, eine Protokollierung, etc., verteilt auf mehrere überwachte Prozesse, d.h. jeweils in einem überwachten Thread, auszuführen;
d) aufbauend auf der Core-Instanz eine Workplace-Instanz (RTF Workplace) ausgestaltet ist, welche die auf der untersten logischen Schicht befindliche Core-Instanz erweitert und die Umsetzung von Client-Applikationen unterstützt; und
e) aufbauend auf der logischen Schicht der Core-Instanz eine weitere logische Schicht mit einer Ensemble-Instanz (RTF Ensemble) bereitgestellt ist, welche Hilfsfunktionen aufweist, die die Umsetzung von Server-Applikationen erleichtert, vorzugsweise solche Hilfsfunktionen, die im Kontext eines verteilten Serversystems für die Ausführung der Software des Leitsystems relevant sind.

2. System nach Anspruch 1,
**dadurch gekennzeichnet, dass**
in der Core-Instanz als Applikationsfunktionen eine Zugverfolgung und eine Protokollierung auszuführbar sind.

3. System nach Anspruch 1 oder 2,
**dadurch gekennzeichnet, dass**
jede Applikationsfunktion als Laufzeitkomponente modularisierbar und von anderen Applikationsfunktionen entkoppelbar ist, wobei auch optional jede Applikationsfunktion beliebig auf unterschiedliche Prozesse verteilbar und bei Bedarf auch mehrfach ausführbar ist.

4. System nach einem der Ansprüche 1 bis 3,
**dadurch gekennzeichnet, dass**
die Core-Instanz zur Entwicklung einer Applikationsfunktion Hilfsmittel bereitstellt, mittels welchen z.B. rechnerlokal kommunizierbar ist, überwachte Subthreads- oder Timer startbar sind.

5. System nach einem der vorangehenden Ansprüche,
**dadurch gekennzeichnet, dass**
die Core-Instanz nebst Massnahmen zur Überwachung und zur Erkennung von Fehlern auch Mittel zur automatischen Wiederherstellung von Teilfunktionen nach einem Fehlerfall bereitstellt.

6. System nach einem der vorangehenden Ansprüche,
**dadurch gekennzeichnet, dass**
je nach Konfiguration durch ein konkretes Produkt in der Core-Instanz Systemprüfungen zur Startzeit oder in periodischen Intervallen ausführbar sind, wie z.B. auf den Füllstand einer Harddisc, auf den Zustand eines Arbeitsspeichers und auf mögliche Datenverfälschung auf dem Filesystem ausführbar sind.

7. System nach einem der vorangehenden Ansprüche,
**dadurch gekennzeichnet, dass**
die logische Schicht der Workplace-Instanz ist ausgestaltet um Hilfsfunktionen aufzuweisen, die vorzugsweise zum Starten und Betreiben von überwachten GUI-Applikationen, zur Bereitstellung einer zuverlässige Akustik für Meldungen der Client-Applikationen und/oder zur Handhabung von Benutzerprofilen oder Benutzersessions verwendbar sind.

8. System nach einem der vorangehenden Ansprüche,
**dadurch gekennzeichnet, dass**
als Hilfsfunktionen ein Zustandsabgleich zwischen Servern und/oder das Betreiben von redundanten Applikationsfunktionen auf der Client- und/oder der Server-Seite vorgesehen sind.
